# EUROPEAN PATENT APPLICATION

(11) **EP 4 814 682 A1**
(43) Date of publication of application: **30.09.2026**
(21) Application number: 26165829.8
(22) Date of filing: 18.03.2026
(51) Int. Cl.: G06F 3/04847, D06F 34/28, D06F 34/32, G06F 3/041, G06F 3/0488, G06F 3/04817, H04L 12/28

(54) **HOME APPLIANCE, OPERATING METHOD THEREOF, AND STORAGE MEDIUM**

(30) Priority: 18.03.2025 KR 20250034406; 14.08.2025 WO PCT/KR2025/012369
(71) Applicant: LG Electronics Inc., Yeongdeungpo-gu Seoul 07336 (KR)
(72) Inventor: KO, Soyeon, 07796 Seoul (KR); KIM, Jonghwan, 07796 Seoul (KR); OH, Sesook, 07796 Seoul (KR); KIM, Jungchul, 07796 Seoul (KR); PARK, Jungin, 07796 Seoul (KR); LEE, Sunju, 07796 Seoul (KR)
(74) Representative: Ter Meer und Partner mbB

(57) **Abstract**

A method of operating a home appliance includes displaying a user interface screen including a first region including a product tab menu and a widget tab menu, and a second region for displaying information based on one of the product tab menu and the widget tab menu; receiving a signal based on a user input associated with one or more electronic products connected to the home appliance, and varying a configuration of the first region or the second region based on the received signal.

## Description

### BACKGROUND

The present disclosure relates to a home appliance and a method of operating the same, and more particularly, to a home appliance capable of improving user convenience, a method operating of the home appliance, and a storage medium storing the method of operating the home appliance.

A home appliance may be an electrical appliance used in a home or a building, such as a laundry treating apparatus (e.g., a washing machine, a dryer, etc.), a refrigerator, an air conditioner, a cooking appliance, or the like.

For example, a laundry treating apparatus may refer to an apparatus that processes laundry, and may perform operations such as washing, spin-drying, and drying. The laundry treating apparatus may be, for example, a washing machine or washer that washes laundry items such as clothes or bedding by using the emulsifying action of detergent, the water flow generated by the rotation of a wash tub or a pulsator, and a mechanical force applied by the pulsator; a dryer that dries laundry by supplying hot or cold air; and a refresher that removes wrinkles from clothes by applying steam. The laundry treating apparatus may also be implemented as a washer/dryer combo (or all-in-one washer dryer) that provides multiple functions.

With the advancement of performance of home appliances, various functions are being additionally incorporated into the home appliance.

In addition, home appliances, particularly products having composite functions, such as washing machines, dryers, and a clothing care apparatus, are being increasingly digitalized and smart, and are provided with a display configured to interface with the user.

Such a display may provide product status information or manipulating settings, and has recently evolved to provide various information together so as to enhance user convenience.

However, most existing product display screens provide fixed information and function (or feature) layouts, which causes inconvenience to the user in that the user has to learn the locations and operations of all functions when using the product for the first time.

For example, in the case of a washing machine, all functions, such as a course selection, temperature control, spin-drying intensity setting, are arranged at fixed positions, which may be cumbersome in that the user has to search for the required function each time. Similarly, a dryer or a combined washer-dryer also provides the same interface regardless of the product status or usage situation, thereby making intuitive use of functions difficult.

As a result, in order to efficiently utilize various functions, the user has to learn in advance the structure of a user interface or the positions of the functions, and even when desired functions, new functions, or context-specific recommended functions are available, there is a limitation in that the user finds it difficult to intuitively recognize and use them. This increased learning burden is a barrier to entry to product use and function utilization.

In addition, although there are functions required in a certain product status or specific situation, accessibility may be reduced because such functions were mixed among other unnecessary functions.

As disclosed in Korean Laid-Open Patent Publication No. 10-2024-0043573, which is hereby incorporated by reference, when switching from a dryer to a washing machine functionality is needed during use, the switching is made through a separate product transition button. However, as the number of connected electronic appliances increases, switching through such a transition button has to be performed multiple times, thereby causing inconvenience to the user. In addition, when product switching operations become frequent, there may arise a problem of product power consumption.

Moreover, as the number of connected electronic appliances increases, it may be difficult for the user to intuitively check which electronic appliance is being controlled.

In addition, providing uniform information without considering user context may reduce user satisfaction.

Accordingly, despite recent technical attempts to improve user experience (UX) and increase accessibility to functions, technologies for providing information display and a function configuration that flexibly change according to product usage situations remain insufficient.

It is an object of the present disclosure to solve the above and other problems.

It is another object of the present disclosure to provide a home appliance capable of improving user convenience, and a method of operating the same.

It is another object of the present disclosure to provide a home appliance that enhances information visibility and allows various functions and services to be easily identified, and a method of operating the same.

It is another object of the present disclosure to provide a home appliance capable of improving operational convenience (ease of use) by providing various services and functions through a widget, and a method of operating the same.

It is another object of the present disclosure to allow a user to efficiently use desired functions through a product tab for performing detailed control of a specific product and a widget tab for providing various functions.

It is another object of the present disclosure to allow a user to intuitively and efficiently use a home appliance by adaptively providing functions according to the user context.

It is another object of the present disclosure to enable a user to more intuitively and flexibly utilize functions by adaptively adjusting the information configuration, arrangement, and button functions of a widget according to the context on a display screen.

It is another object of the present disclosure to provide a more intelligent and personalized user experience.

It is another object of the disclosure to provide a home appliance capable of performing a desired task easily and quickly through a function that is adaptively reconfigured according to a usage situation without learning fixed information, and a method of operating the same.

It is another object of the present disclosure to provide a home appliance capable of dynamically changing the information content, arrangement, and layout of a widget when a product usage situation or a specific condition is satisfied to thereby allow a user to immediately check information most suitable for a current situation and to quickly access a necessary function, and a method of operating the same.

It is another object of the disclosure to provide a home appliance capable of intuitively executing a desired function without additional menu navigation, and a method of operating the same.

It is another object of the present disclosure to provide an intuitive user experience according to an arrangement state of connected products.

The objects of the disclosure are not limited to the objects above, and other objects not stated herein will be clearly understood by those skilled in the art from the following description.

### SUMMARY

In accordance with an aspect of the present disclosure, the above and other objects can be accomplished by providing a home appliance in which a user interface screen is actively configured so as to enhance user convenience, and a method of operating the same.

In accordance with another aspect of the present disclosure, there is provided a home appliance including a display configured to display a user interface screen.

In accordance with another aspect of the present disclosure, there is provided a method of operating a home appliance, the method including: displaying, on the display, a user interface screen including a first region that includes a product tab menu and a widget tab menu, and a second region for displaying information based on one of the product tab menu or the widget tab menu; receiving a signal based on a user input associated with one or more electronic products connected to the home appliance; and varying a configuration of the first region or the second region of the displayed user interface screen based on the received signal.

An embodiment of the present disclosure includes wherein configuration of information displayed in the product tab menu and the second region may be varied based on a signal received from the one or more electronic products.

An embodiment of the present disclosure includes activating one of the product tab menu corresponding to powering on of a product of the one or more electronic products, and wherein the activated product tab menu is displayed to be visually distinct from other product tab menus.

An embodiment of the present disclosure includes displaying information in the second region comprising one or more content items based on selection of the product tab menu.

An embodiment of the present disclosure includes wherein the one or more content items include information of at least a state or a function of an electronic product corresponding to the selected product tab menu.

An embodiment of the present disclosure includes wherein the one or more content items include courses for operating the one or more electronic products arranged according to a preset order, and performing automatic course optimization comprising reordering of the courses based on a usage pattern of the one or more electronic products

An embodiment of the present disclosure includes displaying information in the second region comprising at least one widget associated with at least one of the one or more electronic products included in the product tab menu

An embodiment of the present disclosure includes wherein the at least one widget includes a command button corresponding to a function of the at least one of the one or more electronic products, and causing execution of the function of the at least one electronic product in response to receiving a touch input via the command button.

An embodiment of the present disclosure includes wherein based on a detailed setting for the function being required for execution of the function, activating the product tab menu of the at least one electronic product in the first region and displaying a detailed setting screen for the function of the at least one electronic product in the second region.

An embodiment of the present disclosure includes wherein based on a detailed setting for the function not being required for execution of the function, displaying in the widget information related to execution of the function.

An embodiment of the present disclosure includes wherein the at least one widget includes a command button and displaying in the second region a detailed screen corresponding to the widget in response to a selection received via the command button.

An embodiment of the present disclosure includes receiving a selection of the widget tab menu, and arranging the at least one widget displayed in the second region based on at least a relevance order of a specific electronic product, a relevance order based on a specific operation course, a preset priority, or an order of downloaded widgets.

An embodiment of the present disclosure includes wherein, the at least one widget comprises a plurality of command buttons, and wherein an arrangement position of the plurality of command buttons is varied based on an arrangement of the at least one of the one or more electronic products.

An embodiment of the present disclosure includes wherein a background image is displayed in the at least one widget, and the background image may be a still image or a moving image representing a widget function.

An embodiment of the present disclosure includes displaying a command button related to a function of a widget displayed in the second region.

An embodiment of the present disclosure includes displaying a widget in the second region related to an executed function of one of the one or more electronic products, and displaying a progress bar visually indicating an operation time of the executed function and a progress status of the executed function.

An embodiment of the present disclosure includes displaying a product tab menu based on registration of an additional product with the home appliance.

An embodiment of the present disclosure includes wherein the product tab menu is arranged based on a preset order or a status of at least one of the one or more electronic products.

In an embodiment of the present disclosure, the user interface screen may include a first region including a product tab menu and a widget tab menu.

In an embodiment of the disclosure, the user interface screen may include a second region in which information based on one of the product tab menu and the widget tab menu is displayed.

In an embodiment of the present disclosure, the display may change a portion of a configuration of the user interface screen based on a signal received from one or more electronic products connected to the display.

In an embodiment of the present disclosure, the display may change a configuration of information displayed in the product tab menu and the second region according to a product connected thereto and a signal received from the connected product.

In accordance with another aspect of the present disclosure, there is provided a non-transitory computer-readable storage medium storing instructions that, when executed by one or more processors, cause the one or more processors to display a user interface screen including a first region comprising a product tab menu and a widget tab menu, and a second region for displaying information based on one of the product tab menu or the widget tab menu; receive a signal based on a user input associated with one or more electronic products connected to the home appliance; and vary a configuration of the first region or the second region of the displayed user interface screen based on the received signal.

In accordance with another aspect of the present disclosure, there is provided a method of operating a home appliance, the method including displaying a user interface screen including a widget; receiving a touch input via a command button included in the widget; determining whether the command button is related to a function of an electronic product connected to the home appliance; based on the command button being related to the function of the electronic product and the related function requiring a detailed setting for execution, displaying a detailed setting screen for the function of the electronic product; and based on the command button being related to the function of the electronic product and the related function not requiring a detailed setting for execution, causing the function to be executed at the electronic product and displaying information related to execution of the function of the electronic product.

In an embodiment, the user interface screen may include a first region including a product tab menu and a widget tab menu, and a second region in which the widget is displayed upon selection of the widget tab menu.

In an embodiment, the displaying the detailed setting screen may include activating a product tab menu of the specific electronic product and displaying the detailed setting screen.

In an embodiment, the displaying the execution information may include displaying the execution information in the widget tab menu.

An embodiment of the present disclosure includes. when the command button is not related to the function of the specific electronic product, displaying a detailed screen corresponding to the widget in the widget tab menu.

In an embodiment, the specific electronic product may be an electronic product connected to the display or an electronic product previously controlled via the user interface screen.

In an embodiment, a plurality of widgets may be displayed, and a sorting criterion of the plurality of widgets may vary depending on whether an electronic product connected to the display is operating.

In an embodiment, when one or more electronic products connected to the display are in operation, a widget related to the operating electronic product may be arranged in a forward order, and when no electronic product is in operation, a recently used widget or a frequently used widget may be arranged in the forward order.

According to another embodiment, a home appliance is provided, comprising: a display, one or more processors, and a memory storing instructions which when executed by the one or more processors, cause the one or more processors to: cause the display to display a user interface screen including a first region comprising a product tab menu and a widget tab menu, and a second region for displaying information based on one of the product tab menu or the widget tab menu, receive a signal based on a user input associated with one or more electronic products connected to the home appliance, and vary a configuration of the first region or the second region of the displayed user interface screen based on the received signal.

According to another embodiment, the instructions further cause the one or more processors to: cause the display to display information in the second region comprising at least one widget associated with at least one of the one or more electronic products included in the product tab menu, wherein the at least one widget includes a command button corresponding to a function of the at least one of the one or more electronic products, receive a touch input via the command button, based on a detailed setting for the function being required for execution of the function, activating the product tab menu of the at least one electronic product in the first region and causing the display to display a detailed setting screen for the function of the at least one electronic product in the second region, and cause execution of the function of the at least one electronic product according to detailed settings received via the detailed setting screen.

According to at least one of the embodiments of the present disclosure, it is possible to improve user convenience by adaptively configuring a user interface screen.

According to at least one of the embodiments of the present disclosure, it is possible to enhance information visibility and allow various functions and services to be easily identified.

According to at least one of the embodiments of the present disclosure, by providing various services and functions through a widget, it is possible to enhance operational convenience.

According to at least one of the embodiments of the present disclosure, by adaptively providing functions according to the user context, a user can use a home appliance more intuitively and efficiently.

According to at least one of the embodiments of the present disclosure, by adaptively adjusting the information configuration, arrangement, and button functions of a widget on a display screen according to the context, a user can utilize functions more intuitively and flexibly.

According to at least one of the embodiments of the present disclosure, it is possible to provide a more intelligent and personalized user experience.

According to at least one of the embodiments of the present disclosure, a desired task can be easily and quickly performed through a function that is adaptively reconfigured according to a usage situation, without learning fixed information.

According to at least one of the embodiments of the present disclosure, as the information content, arrangement, and layout of a widget is dynamically changed when a product usage situation or a specific condition is satisfied, a user can immediately check information most suitable for the current situation and quickly access a required function, thereby effectively reducing power consumption of a display.

According to at least one of the embodiments of the present disclosure, a desired function can be intuitively executed without requiring additional menu navigation.

According to at least one of the embodiments of the present disclosure, an intuitive user experience can be provided according to an arrangement state of connected products.

According to at least one of the embodiments of the present disclosure, it can be intuitively identified which product is being controlled through a current screen.

Meanwhile, other various effects will be directly or implicitly disclosed in the following detailed description of embodiments of the present disclosure.

### BRIEF DESCRIPTION OF THE DRAWINGS

FIG. 1 is a perspective view illustrating a home appliance of an embodiment of the disclosure.
FIG.2 simplified internal block diagram of a home appliance of an embodiment of the disclosure.
FIG.3 illustrates control panel of a home appliance according to an embodiment of the disclosure.
FIGS. 4 to 7 are diagrams depicting various embodiments of the present disclosure.
FIG. 8 is a flowchart illustrating a method of operating a home appliance according to an embodiment of the present disclosure.
FIG. 9 is a flowchart illustrating a method of operating a home appliance according to an embodiment of the present disclosure.
FIGS. 10 to 26 are diagrams depicting various embodiments of the present disclosure.
FIG. 27 is a flowchart illustrating a method of operating a home appliance according to an embodiment of the present disclosure.

### DETAILED DESCRIPTION

Reference will now be made in detail to the embodiments of the disclosure, examples of which are illustrated in the accompanying drawings. However, the disclosure may be embodied in many different forms and should not be construed as limited to the embodiments set forth herein.

In order to clearly and briefly describe the present disclosure, illustration of parts that are not related to the description is omitted. Throughout the specification, identical or nearly identical components are denoted by the same reference numerals.

Meanwhile, with respect to constituent elements or components used in the following description, the suffixes "module" and "unit" are used or combined with each other only in consideration of ease in the preparation of the specification, and do not have or indicate mutually different meanings. Therefore, the suffixes "module" and "unit" may be used interchangeably.

Although the terms "first", "second", etc. may be used herein to describe various elements, these elements should not be limited by these terms. These terms are only used to distinguish one element from another.

Meanwhile, a home appliance described herein may be an individual electronic product, examples of which include a laundry treating apparatus (such as a washing machine, a dryer, etc.), a refrigerator, an air conditioner, and a cooking appliance, or a composite electronic product in which a plurality of electronic appliances are connected.

Hereinafter, the home appliance will be described, by way of example, as a composite clothing treatment apparatus including two laundry treating apparatus products.

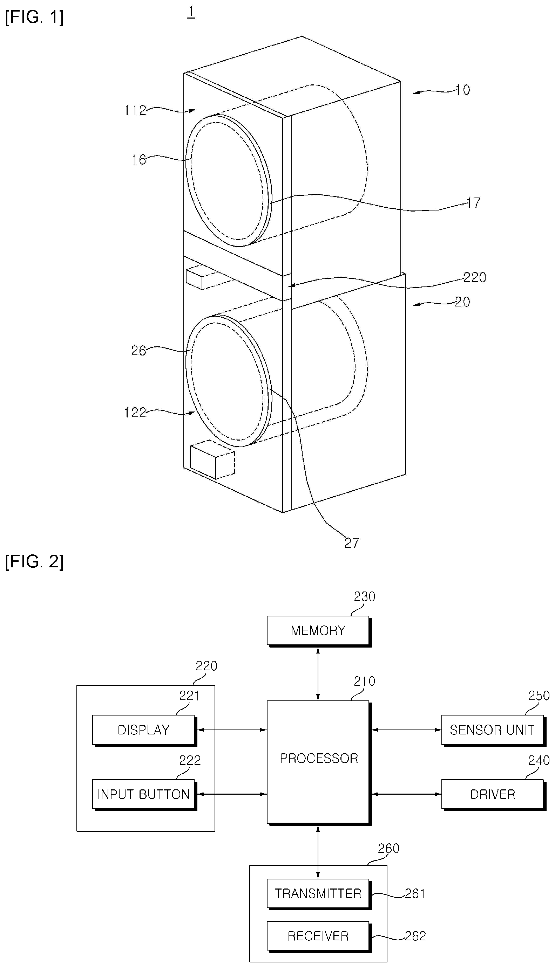

FIG. 1 is a perspective view of a home appliance according to an embodiment of the present disclosure, illustrating an example of a composite clothing treatment apparatus.

Referring to FIG. 1, in an embodiment of the present disclosure, a clothing treatment apparatus 1 includes a first treating apparatus 10 and a second treating apparatus 20. The first treating apparatus 10 and the second treating apparatus 20 may be in various types for treating laundry, such as a washing machine for washing clothes or a dryer for drying clothes.

In one example, FIG. 1 shows a state in which a control panel 220 is installed on the clothing treatment apparatus 1 according to an embodiment of the present disclosure. The clothing treatment apparatus 1 according to an embodiment of the present disclosure may include a control panel 220 disposed between a first front panel 112 and a second front panel 122, and signally connected to the first treating apparatus 10 and the second treating apparatus 20.

The control panel 220 may be provided between the first front panel 112 and the second front panel 122. The control panel 220 may be signally connected to at least one of the first treating apparatus 10 and the second treating apparatus 20.

A front surface of the control panel 220 may be exposed to the outside to define a front surface of the clothing treatment apparatus 1 according to an embodiment of the present disclosure together with the first front panel 112 and the second front panel 122.

The control panel 220 may be signally connected to at least one of the first treating apparatus 10 and the second treating apparatus 20. The control panel 220 may include a display 221 on its front surface to show a state or status of the first treating apparatus 10 and/or the second treating apparatus 20, and an input button 222 for inputting an operation command of the first treating apparatus 10 and/or the second treating apparatus 20.

An electric part may be provided inside the control panel 220, namely, at the rear of the front surface. The electric part may be electrically connected to the first treating apparatus 10 and/or the second treating apparatus 20 to thereby exchange state (or status) information or control signals with the first treating apparatus 10 and/or the second treating apparatus 20.

For example, the electric part may include a controller of the first treating apparatus 10 and a controller of the second treating apparatus 20, may include an integrated controller that controls both the first treating apparatus 10 and the second treating apparatus 20, may include a panel controller operatively connected to the controller of the first treating apparatus 10 and the controller of the second treating apparatus 20, or may be controlled by the controller of the first treating apparatus 10 and the controller of the second treating apparatus 20 without a separate controller.

In addition, the first treating apparatus 10 and the second treating apparatus 20 may be controlled through a separate server. At least one of the first treating apparatus 10 and the second treating apparatus 20 may include a communication module to communicate with the server. The first treating apparatus 10 and the second treating apparatus 20 may transmit data collected from the product such as sensing data, a user manipulation signal, and the like to the server. The first treating apparatus 10 and the second treating apparatus 20 may receive a control signal from the server, and may operate according to the received control signal.

The control panel 220 may be disposed between a first laundry inlet 16 and a second laundry inlet 26. That is, in one embodiment of the present disclosure, the control panel 220 may be disposed between a first cabinet door 17 and a second cabinet door 27.

In one embodiment of the present disclosure, as the control panel 220 is provided between the first laundry inlet 16 and the second laundry inlet 26, between the first cabinet door 17 and the second cabinet door 27, or between the first front panel 112 and the second front panel 122, a position of the control panel 220 that is convenient for a user to check and manipulate the control panel 220 may be secured.

For instance, when the first treating apparatus 10 and the second treating apparatus 20 are provided with respective control panels, because the first treating apparatus 10 is positioned over the second treating apparatus 20, the control panel of the first treating apparatus 10 may be at an inconvenient position for the user to manipulate.

In addition, because the respective control panels are provided on the first treating apparatus 10 and the second treating apparatus 20, it may cause inconvenience for the user to manipulate the first treating apparatus 10 and the second treating apparatus 20 together.

In contrast, the clothing treatment apparatus 1 according to an embodiment of the present disclosure is provided with the single control panel 220 that is connected to both the first treating apparatus 10 and the second treating apparatus 20, thereby enabling the user to conveniently manipulate the first treating apparatus 10 and the second treating apparatus 20 together.

FIG. 2 is a simplified internal block diagram of a home appliance according to an embodiment of the present disclosure.

Referring to FIG. 2, each apparatus product (10, 20) included in the clothing treatment apparatus 1 may include a sensor unit 250, a control panel 220, a memory 230, a communication module 260, and a processor 210 configured to control the overall operation. These are components that may be commonly included in each product (10, 20), and detailed configurations may vary depending on characteristics of the appliances (10, 20). In addition, each product (10, 20) may include a component to perform a predetermined operation, and a driver 240 therefor.

The first treating apparatus 10 may correspond to a dryer for drying laundry, and may include a motor configured to provide power to a first drum 12 rotatably disposed. The driver 240 of the dryer may include a motor driver, such as an inverter, configured to drive the motor.

The second treating apparatus 20 may correspond to a washing machine (or washer) for washing clothes, and may include a second drum 22 configured to receive laundry therein, a tub 24, and a motor configured to provide power to the second drum 22. The driver 240 of the washing machine may include a motor driver, such as an inverter, configured to drive the motor, a pump driver configured to drive various pumps and the like.

Meanwhile, the type, the number, and the installation position of sensors included in the sensor unit 250 may vary depending on the type of each product (10, 20).

The memory 230 may store control data for controlling the operation of the products (10, 20), and operation data generated or sensed during operation. The memory 230 may store execution programs for each function, data for operation control, and data to be transmitted and received.

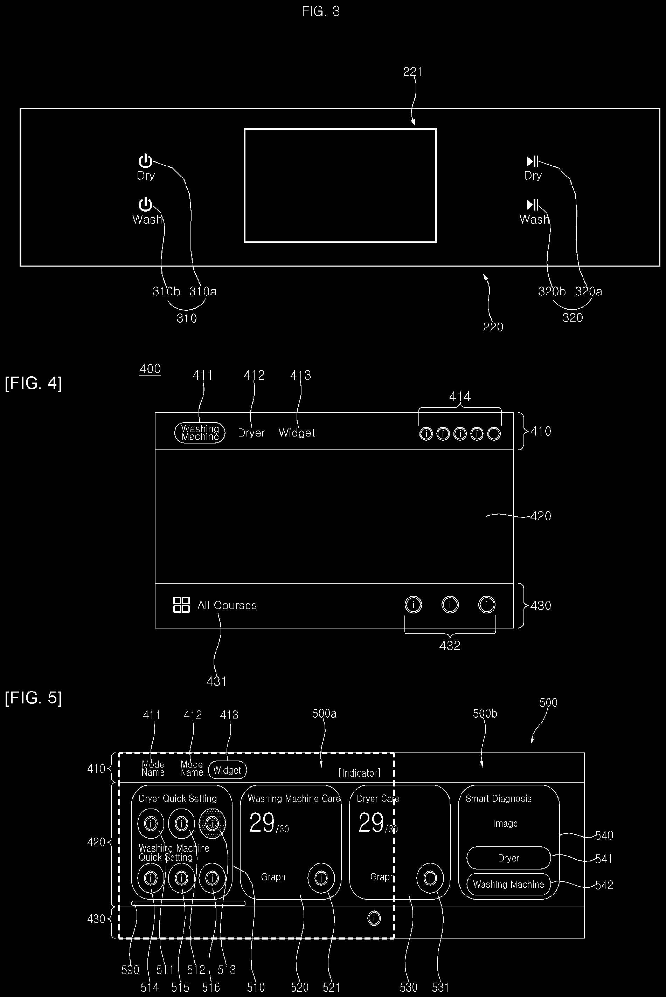

Referring to Figure 3, control panel 220 may serve as an interface device and may include a component for providing information to a user and receiving a user control command.

The control panel 220 may include a display 221. In addition, in some embodiments, the control panel 220 may include at least one input unit such as a button, a switch, and a touch input element.

For example, the display 221 may be configured as a touch screen, and may display a user interface screen and receive a user touch input. In addition, the control panel 220 may further include one or more input buttons 222.

The display 221 may visually display predetermined information. For example, the display 221 may output state information of the clothing treatment apparatus 1, sensing data sensed by the sensors, and guidance information for guiding a specific operation/function.

The display 221 may be implemented as a touch screen and may also be used as an input unit.

A user interface provided by the display 221 may reflect a combination, an arrangement, and an operating condition of the connected products 10, 20.

When a user command or predetermined data is input in response to manipulation of the input unit, the control panel 220 may transmit the input data to the processor 210.

The processor 210 may control the products 10, 20 according to a user command and the like.

The processor 210 may be an integrated controller of the products 10, 20.

Alternatively, the processor 210 may correspond to a controller provided in at least one of the products (10, 20). For example, the first treating apparatus 10 and the second apparatus 20 may each include a controller for controlling the operation. The processor 210 may correspond to the controllers of the products (10, 20), and may control the operation of each of the products (10, 20).

The respective controllers may communicate with each other. In some cases, at least one controller may serve as a higher-level controller configured to control another controller or appliance.

In addition, either one of the products (10, 20) may not be provided with an individual controller therein, and may operate under the control of a controller mounted on a printed circuit board (PCB) disposed inside another appliance.

Meanwhile, the processor 210 may be implemented as a part of a block of the controller, and any one controller may include a plurality of processors 210. The plurality of processors 210 may be disposed in a predetermined space together or mounted on one PCB together. Alternatively, part of the plurality of processors 210 may be mounted on another PCB.

The products (10, 20) may communicate with another device, a mobile terminal, and the like through the communication module 260. The communication module 260 of at least one of the products (10, 20) may include a wireless communication module to wirelessly communicate with a mobile terminal, a server, and the like. In addition, at least one of the products (10, 20) may include a plurality of communication modules employing different communication schemes.

The communication module 260 may include a transmitter 261 configured to transmit predetermined data to another device. In addition, the products (10, 20) may include a receiver 262 configured to receive predetermined data from another device. The transmitter 261 and the receiver 262 may be integrated and be configured as a transceiver.

FIG. 3 illustrates a control panel of a home appliance of an embodiment of the disclosure.

Referring to FIG. 3, the display 221 and the input button 222 may be disposed on the front of the control panel 220. For example, the input button 222 may include a first button 310 for power on or off, and a second button 320 for executing or pausing an operation.

The display 221 may be positioned at the center of the control panel 20, and the first button 310 and the second button 320 may be positioned to the left and right of the display 221, respectively.

The control panel 220may receive all control commands of the products (10, 20).

The first button 310 may include a first upper button 310a at an upper side and a first lower button 310b at a lower side. The first upper button 310a at the upper side may correspond to the first treating apparatus 10 (e.g., a dryer) disposed at the upper side, and the first lower button 310b at the lower side may correspond to the second treating apparatus 20 (e.g., a washing machine or washer) disposed at the lower side.

When an input is received on the first upper button 310a, the first treating apparatus 10 may be turned on. When an input is received on the first upper button 310a again, the first treating apparatus 10 may be turned off.

When an input is received on the first lower button 310b, the second treating apparatus 20 may be turned on. When an input is received on the first lower button 310b again, the second treating apparatus 20 may be turned off.

The second button 320 may include a second upper button 320a at an upper side and a second lower button 320b at a lower side.

Upon receiving an input on the second upper button 320a, the first treating apparatus 10 may perform a predetermined operation. For example, when an input is received on the second upper button 220a while one of a plurality of drying operation courses displayed on the display 221 is in focus, the first treating apparatus 10 may perform the focused drying operation course.

Upon receiving an input on the second lower button 320b, the second treating apparatus 20 may perform a predetermined operation. For example, when an input is received on the second lower button 320b while one of a plurality of washing operation courses displayed on the display 221 is in focus, the second treating apparatus 20 may perform the focused washing operation course.

The display 221 may be implemented as a touch screen to receive a touch input, thereby minimizing the number of the input buttons 222. In addition, by reducing the number of the input buttons 222, the size of the display 221 in the control panel 220may be increased.

Meanwhile, at least some of the input buttons 222 may be implemented as touch-based UI elements within the display 221, and a user may execute a command by touching a button on the UI.

For example, the second button 320, the second upper button 320a, and the second lower button 320b, which correspond to an execution button, may be replaced with virtual buttons (UI elements) displayed within the display 221, and the user may input an execution command through a touch input on the display 221.

The display 221 may display a user interface screen.

FIGS. 4 to 7 are diagrams referred to in the description of a method of operating a home appliance according to an embodiment of the present disclosure.

FIG. 4 shows an example layout of a user interface screen.

Referring to FIG. 4, a user interface screen 400 may include a first region 410 at an upper side and a second region 420 at a lower side.

The first region 410 may be a navigation region, in which tab menus 411, 412, and 413 are displayed.

The second region 420 may be a main information region, in which a screen based on a tab menu item selected from among the tab menus 411, 412, and 413 is displayed.

The tab menus 411, 412, and 413 may include a product tab menu 411, 412 and a widget tab menu 413.

The product tab menu 411, 412 may include items for selecting the connected products (10, 20). For example, referring to FIG. 4, the product tab menu 411, 412 may include a washing machine product tab menu item 411 corresponding to the second treating apparatus 20, and a washing machine product tab menu item 412 corresponding to the first treating apparatus 10.

The product tab menu 411, 412 may include items corresponding to the products (10, 20) physically connected to the control panel 220.

Alternatively, the product tab menu 411, 412 may include items corresponding to the products (10, 20) electrically connected to the control panel 220. The product tab menu 411, 412 may include items corresponding to the products (10, 20) electrically connected to the display 221.

The expression "electrically connected" may denote a state in which two or more components (e.g., parts, circuits, etc.) are connected so that a current, a signal, or power can be transmitted. The electrical connection generally includes a physical connection so that a signal or power can be transmitted. For example, the electrical connection may be achieved through a wire, a semiconductor device, or a conductor having a specific pattern.

In some embodiments, the product tab menu 411, 412 may further include an item corresponding to a product that is communicatively connected to at least one of the first treating apparatus 10, the second treating apparatus 20, and the control panel 220.

The communication connection transmits and receives data by electrical signals and thus generally includes an electrical connection. However, in the case of wireless communication, a wireless communication connection may exist without an electrical or physical connection.

Meanwhile, upon power-on (booting), a menu order (or sequence) of the product tabs may be arranged such that a product physically coupled with the control panel 220is preferentially placed.

Additionally, products having similar functions such as a washing machine/a dryer/a styler or an oven/a cooktop/a microwave oven/a hood may be arranged close to one another.

The product tab menu may be arranged based on a generation order or at least one of electronic products electrically connected to the display. An indicator 414 may be further provided in the first region 410. For example, the indicator 414 may indicate a Wi-Fi communication connection status, a door lock status, and the like.

The user interface screen 400 may further include a third region 430. The user interface screen 400 may include a first region 410 at the top, a second region in the middle, and a third region 430 at the bottom.

The arrangement of the first region 410, the second region 420, and the third region 430 is merely illustrative, and the positions of the first region 410, the second region 420, and the third region 430 may be freely changed.

For example, the first region 410 may be located below the second region 420, or the third region 430 may be located above the second region 420.

In addition, the first region 410 may be arranged on the left, the second region in the middle, and the third region on the right.

Since the second region 420 displays at least one content, the second region 420 may have a larger area than the first region 310 or the third region 430.

The third region 430 may be a toolbar region, including for example, an All Courses (list) button 431 for switching to an entire course screen (or in other apparatus type cases, content related to functions of the electronic product, such as a recipe list for a cooking related apparatus), and buttons 432 for quick settings and actions, such as reservation, remote control, and settings, are displayed.

An option button corresponding to a detailed setting for a corresponding course may be displayed in the third region 430.

Meanwhile, in this specification, although a 'course' is exemplified as content related to functions of the electronic product, it may be applied in correspondence with functions of each electronic product.

For example, in addition to the course, at least one of a menu for setting each electronic product, a detailed setting, and a product state (or status) may be provided. In the case of an oven for example, at least one information of a recipe or a recipe setting may be displayed. In another example, for a refrigerator, temperature information of each compartment may be displayed.

Meanwhile, as for the entire course, it may be additionally generated or activated when a course is selected. As for the option, because basic settings such as appliance management are fixed, a course (or cycle, menu) that can be changed by a user may be deactivated or deleted. Meanwhile, in the user interface screen, information on the second region 420 and displayed information of the third screen 430 may be different.

Course information on the second region 420 may include a course name, state information (an operation state of a related appliance), a scheduled completion time, a weight, a remaining time and a course description according to a course operation of the related appliance, or the like. Meanwhile, a still image or a moving image representing information (operation information, a food image, etc.) of a related course (menu) may be displayed in a background of the second region 420.

In the third region 430, upon selection of the entire course, information such as a course name may be provided.

A user may touch and select any one of the product tab menu 411, 412 or the widget tab menu 413.

In the second region 420, information based on a menu item selected from the product tab menu 411, 412 and the widget tab menu 413 may be displayed.

Meanwhile, the display 221 may configure the user interface screen 400 based on the communicatively connected products (10, 20). The display 221 may configure the user interface screen 400 based on the electrically connected products (10, 20). The display 221 may be connected to other components of the products (10, 20) so as to transmit and receive signals. For example, the display 221 may transmit a signal corresponding to a touch input to the processor 210. In addition, the display 221 may receive a control command, state information, and the like from the processor 210.

The display 221 configures the user interface screen 400 based on a received signal. The display 221 may configure the user interface screen 400 based on signals associated with the connected products (10, 20), and signals received from the connected products (10, 20).

For example, the display 221 may receive signals regarding a power on/off state of the connected products (10, 20) and an operation state from the electrically connected products (10, 20), and may configure the user interface screen corresponding to the received state.

In addition, when there is a touch input or other input on the input buttons 310 and 320, the display 221 may configure the user interface screen in response to the corresponding input.

In addition, the display 221 may configure the user interface screen under the control of the processor 210.

The display 221 may variably display the configuration of information displayed in the product tab menu 411, 412 and the second region 420 according to the connected products (10, 20) and the signals received.

For example, when two products (10, 20) are physically or electrically connected, such as a washing machine and a dryer or a dual oven (an upper oven and a lower oven), the product tab menu 411, 412 may include two tab menu items. When any one of the two product tabs is selected, the second region 420 or an entire screen of the display 221 may display a detailed screen corresponding to the selected product.

The detailed screen may display all of the electronic products on a single screen according to operation states of the respective electronic products, and the display arrangement may be based on actual product placement positions.

For example, when the dryer is placed on top and the washing machine is placed on the bottom, the detailed screen may display a screen corresponding to the dryer toward the upper side and a screen corresponding to the washing machine toward the lower side. In the case of a single product such as a washing machine, a dryer, or a washer-dryer combo, one product tab menu may be displayed, and the second region 420 or the entire screen of the display 221 may display a detailed screen of the single product when the product tab menu is selected.

In addition, when the widget tab menu 413 is selected, the second region 420 or the entire screen of the display 221 may display a widget screen.

FIG. 5 illustrates an example of a user interface screen 500 when the widget tab menu 413 is selected, in which a widget screen is exemplified.

Referring to FIG. 5, upon selection of the widget tab menu 413, a plurality of widgets 510, 520, 530, and 540 may be displayed in the second region 420.

Meanwhile, a background of the widget 510, 520, 530, 540 may display image information related to a corresponding function, and a still image or a moving image (or a video) may be output.

Content may refer to information or messages to be delivered to a user, and may be an object that the user reads, views, listens to, or experiences. A widget may be a user interface (UI) component (interface tool) that enables the user to view, manipulate, and interact with the content. That is, the widget may serve as a tool or frame for displaying or manipulating the content, and may support interaction with the user.

The widget may be regarded as a special type of content. The widget may allow information to be presented and functions to be used at a specific location without opening an application. The widget enables the user to quickly obtain necessary information or to conveniently use a specific function.

By providing useful services and functions in the form of a widget, it is possible to improve operational convenience. In addition, by classifying and displaying functions into widgets, it is possible to enhance information visibility and to easily identify various functions and services.

When the number of the plurality of widgets 510, 520, 530, and 540 are large, only some widgets 510, 520, and 530 may be displayed on a display screen 500a. In this case, a user may scroll left and right to navigate a region 500b that is not displayed.

To assist the user in navigating the widget, a scroll bar 590 may be displayed in the second region 420.

When the widget tab menu 413 is selected, information displayed in the second region 420 may include at least one of the widgets 510 520, 530, and 540 based on the product (10, 20) included in the product tab menu 411, 412.

The plurality of widgets 510, 520, 530, and 540 may include a widget associated with at least one product included in the product tab menu 411, 412. That is, at least one of the widgets 510, 520, 530, and 540 may include a widget related to the first treating apparatus 10, a widget related to the second treating apparatus 20, and a widget related to both the first treating apparatus 10 and the second treating apparatus 20.

For example, referring to FIG. 5, the widget 510, 520, 530, 540 may include a quick setting widget 510 related to both the first treating apparatus 10 and the second treating apparatus 20, a washing machine management widget 520 related to the second treating apparatus 20, a dryer management widget 530 related to the first treating apparatus 10, and a smart diagnosis widget 540 related to both the first treating apparatus 10 and the second treating apparatus 20.

In addition, the widget may include a widget unrelated to a specific product. For example, a weather widget, a clock widget, a timer widget, a stocks widget, and the like may be provided.

The widget 510, 520, 530, 540 may be a default widget installed at the time of manufacture. An arrangement order of the plurality of widgets 510, 520, 530, and 540 may be variable based on a user's setting input or a user's usage pattern. At least some of the default widgets may be set to be undeletable.

In addition, a user may download a widget using an application store or a home appliance control application. The clothing treatment apparatus 1 may download a predetermined widget and apply the widget to the user interface screen.

When a touch input is received on any one of the widgets 510, 520, 530, and 540, the touched widget may be selected.

In addition, at least some of the widgets 510, 520, 530, and 540 may include a command button for a predetermined function. When a touch input is received on the command button, the clothing treatment apparatus 1 may perform a function corresponding to the command button according to a control of the processor 210.

For example, the quick setting widget 510 may include command buttons 511, 512, and 513 that allow settings to be quickly applied to the first treating apparatus 10 without a screen transition (or with only one screen transition). In addition, the quick setting widget 510 may include command buttons 514, 515, and 516 that allow settings to be quickly applied to the second treating apparatus 20 without a screen transition (or with only one screen transition).

When there is a touch input on one command button 513, a setting corresponding to the command button 513 may be immediately applied to the first treating apparatus 10.

When the command button 521 of the washing machine management widget 520 and the command button 531 of the dryer management widget 530 are selected, a function of sterilizing/managing the corresponding appliance may be executed or a screen for setting the sterilizing/managing function may be provided.

The smart diagnosis widget 540 may include command buttons 541 and 542 corresponding to the respective products (10, 20).

Meanwhile, of the plurality of widgets 510, 520, 530, and 540, the widgets 510 and 540 that are both related to the connected product, may include a plurality of command buttons. In this case, arrangement positions of the plurality of command buttons may be varied in accordance with an arrangement of the connected products (10, 20), so that the command buttons may intuitively indicate a product with which they are associated.

For example, in the quick setting widget 510, the command buttons 511, 512, and 513 corresponding to the first treating apparatus 10 disposed at the upper side may be displayed toward the upper side, and the command buttons 514, 515, and 516 corresponding to the second treating apparatus 20 disposed at the lower side may be displayed toward the lower side.

In addition, in the smart diagnosis widget 540, the command button 541 corresponding to the first treating apparatus 10 disposed at the upper side may be displayed toward the upper side, and the command button 542 corresponding to the second treating apparatus 20 disposed at the lower side may be displayed toward the lower side.

Meanwhile, when there is an input on a command button through the widget, it may operate in different manners depending on varying conditions.

The operation may vary depending on whether the command button is related to a function of a specific electronic product and whether a detailed setting is required.

When there is a touch input on a command button included in the widget, if the command button is related to a function of a specific electronic product and a detailed setting for the function of the specific electronic product is required, the display 221 may activate a product tab menu of the specific electronic product and display a detailed setting screen for the function of the specific electronic product.

In the case of a function requiring a detailed setting, providing a detailed setting screen first may minimize user operations and screen transitions.

When there is a touch input on a command button included in the widget, if the command button is related to a function of a specific electronic product and a detailed setting for the function of the specific electronic product is not required, the display 221 may display execution information on the function of the specific electronic product in the widget tab menu.

In the case of a function not requiring a detailed setting, a corresponding electronic product may immediately execute the function.

The display 221 may provide execution information on the executed function within the current widget tab menu screen, without switching to the product tab menu screen.

Meanwhile, the execution information may be provided in the form of a pop-up. Alternatively, the execution information may be displayed in a corresponding widget.

Meanwhile, when there is a touch input on a command button included in the widget, if the command button is not related to a function of a specific electronic product, the display 221 may display a detailed screen corresponding to the widget.

When it is not a function setting (e.g., home appliance registration, etc.) for a related home appliance, a detailed screen may be applied within the widget tab. In addition, a detailed screen may also be displayed in cases such as a smart diagnosis widget, providing detailed information (weather), or moving to a webpage (a third-party application).

For example, in the case of a weather widget, the display 221 may display a detailed screen related to weather.

Meanwhile, when there is an input on a command button related to product control, a related product tab menu may be activated, and the screen may be switched to a screen of the product tab menu.

Alternatively, when a quick action is intended, as in the quick setting widget 510, the corresponding function may be directly executed in the widget without a screen transition.

Meanwhile, in the case of a command button of a widget that is unrelated to product control, such as the smart diagnosis widget 540, a pop-up window may be provided.

Even when command buttons have the same display format, by distinguishing between a product control user interface and other user interfaces in display, it is possible to enhance intuitive user experience and enable efficient product control.

When any one of the product tab menus 411 and 412 is selected, the second region 420 or the entire screen of the display 221 may display a detailed screen corresponding to the selected product.

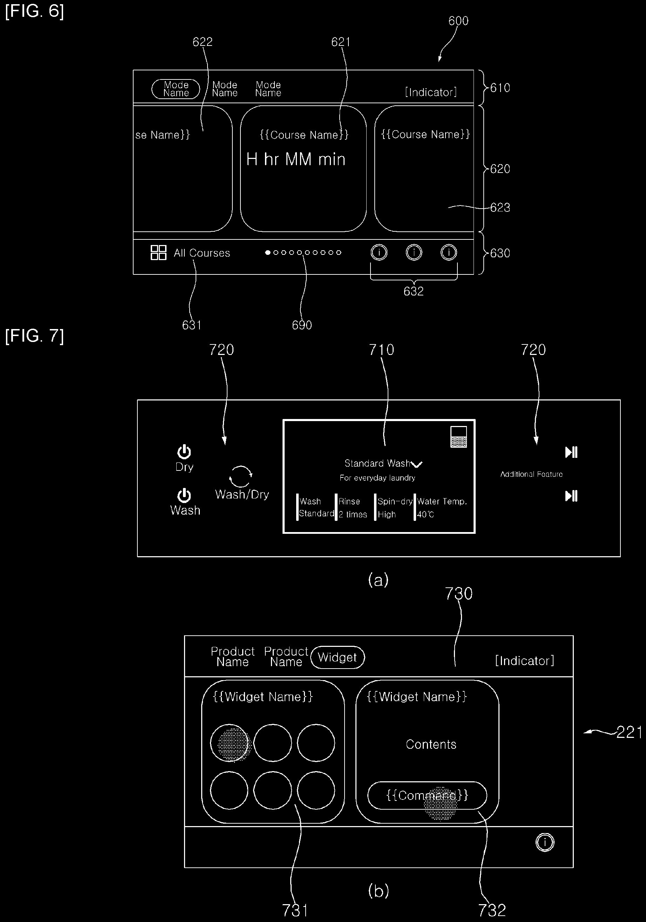

FIG. 6 illustrates an example of the user interface screen 500 when any one of the product tab menus 411 and 412 is selected, in which a detailed screen corresponding to the selected product is illustrated.

Referring to FIG. 6, a detailed screen 600 may include a first region 610, a second region 620, and a third region 630.

A product tab menu and a widget tab menu may be displayed in the first region 610, and one or more contents (content items) 621, 622, and 623 based on a selected product tab menu may be displayed in the second region 620.

In addition, an All Courses button 631 and buttons 632 for quick settings and actions such as reservation, remote control, and setting may be displayed in the third region 630.

Meanwhile, the one or more contents 621, 622, and 623 may include at least one of a state of an electronic product corresponding to the selected product tab menu or a function of the electronic product.

The one or more contents 621, 622, and 623 may include operation courses (or content related to functions of each product such as a recipe list).

For example, when the washing machine product tab menu item 411 corresponding to the second treating apparatus 20 is selected, a plurality of washing operation courses may be displayed in the second region 620.

When the dryer product tab menu item 412 corresponding to the first treating apparatus 10 is selected, a plurality of drying operation courses may be display in the second region 620.

Meanwhile, among the plurality of operation courses, an operation course displayed at the center may be in focus as a current course. Previous and next courses may be displayed on left and right sides of the operation course focused at the center.

When the number of the plurality of contents 621, 622, and 623 is large, only some of the contents 621, 622, and 623 may be displayed in the detailed screen 600. A user may scroll left and right to navigate the content that is not displayed.

To assist the user in navigating content, pagination 690 may be displayed in the third region 630.

The pagination 690 may indicate which page among a total number of pages is currently displayed. The pagination 690 may display page information of the current course.

The pagination 690 is displayed upon selection of the product tab menu 411, 412. In addition, the scroll bar 590 is displayed upon selection of the widget tab menu 413. Accordingly, the selection of the product tab menu 411, 412 and the widget tab menu 413 may be displayed in a distinguished manner, and it may be intuitively indicated that they operate in different manners.

Meanwhile, an input method for selecting or executing one of the one or more contents 621, 622, and 623 may be different from an input method for any one of one or more widgets 510, 520, 530, and 540.

The one or more contents 621, 622, and 623 may be selected or executed though an input of the second button 320, and an input for the plurality of widgets 510, 520, 530, and 540 may be performed through a touch input.

For example, when there is an input on the second upper button 320a while one of the plurality of drying operation courses displayed on the display 221 is in a focused state, the focused drying operation course among the plurality of drying operation courses may be performed.

Alternatively, when there is an input on the second lower button 320b while one of the plurality of washing operation courses is in a focused state, the focused washing operation course among the plurality of washing operation courses may be performed.

An input for the plurality of widgets 510, 520, 530, and 540 may be performed based on a touched widget or an object located in a touched area within the widget.

(a) of FIG. 7 illustrates an example of a conventional user interface according to the existing art, and (b) of FIG. 7 illustrates a user interface according to an embodiment of the disclosure.

Referring to FIG. (a) of FIG. 7, a conventional home appliance of the existing art is controlled based on a physical button 720, and a display 710 is merely a limited means for providing current status information. In addition, because numerous physical buttons 720 needed to be provided, the screen size of the display 710 is small.

Further, depending on the type of home appliance and the installation environment, in many cases there may belimitations in increasing the size of the display 710, making it difficult to intuitively provide various information.

In particular, when the home appliance is a composite apparatus including a plurality of appliance products, there may be even greater difficulties.

For example, it may be difficult to intuitively recognize within a short time which appliance the current screen provided information for.

In addition, when the number of connected appliances or provided services increased, it may be inconvenient for the user to perform desired control.

According to an embodiment of the present disclosure, functions and information may be provided by distinguishing between a product tab and a widget tab. For example, the product tab may provide a user interface related to detailed product control. The widget tab may provide quick control and service functions, and a user may freely add a function service as desired.

(b) of FIG. 7 illustrates an example user interface screen 730 on which a plurality of widgets 731 and 732 are displayed upon selection of a widget tab.

In some cases, as the number of widgets/courses increases, it may not be easy to check and select a desired function/course. In addition, when controlling each appliance product, several steps may need to be performed for detailed control.

Simply increasing the screen size may not fundamentally solve problems in terms of functional accessibility and user experience (UX).

Generally, in certain user interface designs, when more information is displayed on one screen, the user may feel confused due to information overload, or it may become more difficult to find necessary information.

Also generally, if functions are dispersed on an enlarged screen, the movement of the user's gaze may become longer and an operation sequence (user flow) may become complicated, so that it takes more time to reach a desired function.

In addition, since generally a home appliance has a limited size, when a display size is enlarged within the limited size of the home appliance, a space for providing functions of the home appliance may be reduced, so there may be a limitation in the extent of enlarging the display size.

Moreover, generally if a wide screen merely serves to list a large amount of information, it may be recognized by the user as meaningless waste of space, thereby reducing overall user experience.

In addition, when using conventional products of the existing art, the user had to learn and use information and functions designed to be fixed.

The present disclosure enables intuitive use of functions through variable reconfiguration of functions according to a usage situation.

Accordingly, embodiments of the present disclosure dynamically configures a user interface screen based on the state of each product and the current situation. That is, in a case where a product is used or a specific condition occurs, information, arrangement, and layout of widgets may be changed, thereby facilitating easy reconfiguration of information and enabling quick and convenient access to functions.

For example, a sorting criterion of widgets may be configured to differ according to whether a product is operating. When the product is in operation, widgets related to the product may be listed, and when the product is not in operation, recently used or frequently used widgets may be listed.

For example, when scrolling (swiping) major content such as a course, the content may be specified and aligned at the center so as to accurately indicate a selected course and prevent malfunction.

A sorting criterion of widgets may vary depending on whether an electronic product connected to the display 221 (or an electronic product having the display 221 or an electronic product recently controlled) is operating.

When one or more electronic products connected to the display 221 are in operation, widgets related to the operating electronic products may be arranged with priority, e.g., at the front of the order.

When no electronic product is in operation, recently used widgets or frequently used widgets may be arranged with priority, e.g., at the front of the order.

In addition, rather than giving generalized functions to buttons included in the widgets, roles of the buttons may be differently assigned according to concepts of the respective widgets, thereby leading to a usage flow conforming to the context.

For example, a button of a widget related to basic control may be set to perform a role of controlling a related product. A button of a widget related to detailed control may be set to perform a role of guiding a user to move to a product tab. A button of a widget unrelated to service functions or product function settings may be set to directly provide a function corresponding to the button within the widget.

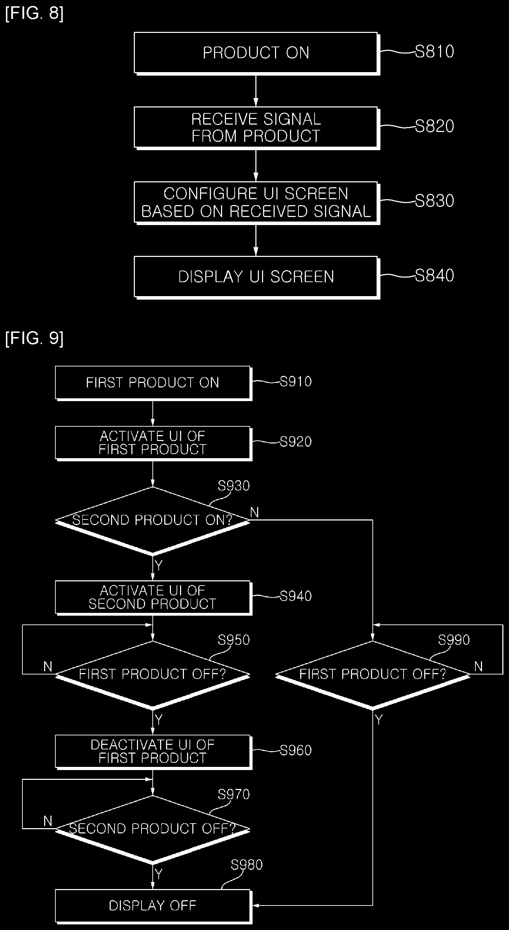

FIG. 8 is a flowchart illustrating a method of operating a home appliance according to an embodiment of the present disclosure.

Referring to FIG. 8, when a product is turned on (S810), the display 221 may receive a signal from the turned-on product or the processor 210 (S820).

When at least one of the connected products (10, 20) is turned on (S810), the display 221 may display a user interface screen (S840).

In this case, the display 221 may configure the user interface screen 400 based on the received signal (S830). The display 221 may configure the user interface screen based on a signal associated with the connected product (10, 20) and a signal received from the connected product (10, 20).

For example, the display 221 may receive, from the connected product (10, 20), a signal regarding a power on/off state and an operation state of the connected product (10, 20), and may configure the user interface screen according to the corresponding state.

In addition, when there is a touch input or an input on the input button 310, 320, the display 221 may configure the user interface screen in response to the corresponding input.

The display 221 may display a user interface screen that includes a first region including a product tab menu and a widget tab menu, and a second region in which information based on any one of the product tab menu and the widget tab menu is displayed (S840).

The display 221 may change part of a configuration according to the signal received from connected product (10, 20) (S830), and may display a user interface screen according to the changed configuration (S840). For example, configurations of information displayed in the product tab menu 411, 412 and in the second region 420 may be changed.

In addition, the display 221 may change configurations of information displayed in the product tab menu 411, 412 and in the second region 420 according to the connected product (10, 20) and the signal received therefrom (S830), and may display a user interface screen according to the changed information configurations (S840).

For example, when one or more products are turned on (S820), the display 221 may activate, in the product tab menus, a product tab menu corresponding to the turned-on product (S830), and may display a user interface screen including information corresponding to the activated product tab menu (S840).

Since turning on a specific product implies that a user intends to control the product, a product tab menu corresponding to the turned-on product may be activated (S830), and a user interface screen for the product may be preferentially provided (S840). Accordingly, a state or function of the related product may be controlled quickly and efficiently with minimal manipulation. In addition, by efficient screen transition, unnecessary screen transitions may be prevented and power consumption may be minimized.

The activated product tab menu may have a display state different from the remaining product tab menu(s). That is, the activated product tab menu may be displayed so as to be distinguished from the deactivated product tab menu by at least one of a color, a size, and a shape of the display state.

FIG. 9 is a flowchart illustrating a method of operating a home appliance according to an embodiment of the present disclosure.

Referring to FIG. 9, a first product may be turned on (S910). The home appliance may be a composite apparatus including a plurality of products. Here, the first product may correspond to a product that is turned on first among the plurality of products. For example, the home appliance may be the clothing treatment apparatus 1 including the first treating apparatus 10 and the second treating apparatus 20. When there is an input on the first upper button 310a while the first treating apparatus 10 and the second treating apparatus 20 are turned off, the first treating apparatus 10 may be turned on first.

When the first product is turned on (S910), the display 221 may activate and display a user interface related to the first product (S920).

For example, a product tab menu corresponding to the first treating apparatus 10 may be activated and displayed as being selected in the first region 410. In addition, a detailed screen corresponding to the first treating apparatus 10 may be displayed in the second region 420.

Thereafter, a second product may be turned on (S930). For example, when there is an input on the first lower button 310b while the first treating apparatus 10 is turned on, the second treating apparatus 20 may be turned on.

When the second product is turned on (S930), the display 221 may activate and display a user interface related to the second product (S940). For example, a product tab menu corresponding to the second treating apparatus 20 may be activated and displayed as being selected in the first region 410, and the selected product tab menu may be switched from the first treating apparatus 10 to the second treating apparatus 20. In addition, a detailed screen corresponding to the second treating apparatus 20 may be displayed in the second region 420.

Meanwhile, when the first product is turned off while the second product is turned on (S950), the user interface related to the first product may be deactivated (S960).

Thereafter, when the second product is turned off (S970), the display 221 may also be turned off (S980).

Meanwhile, in a state where only the first product is turned on while the second product is turned off (S930), when the first product is turned off (S990), the display 221 may be turned off (S980).

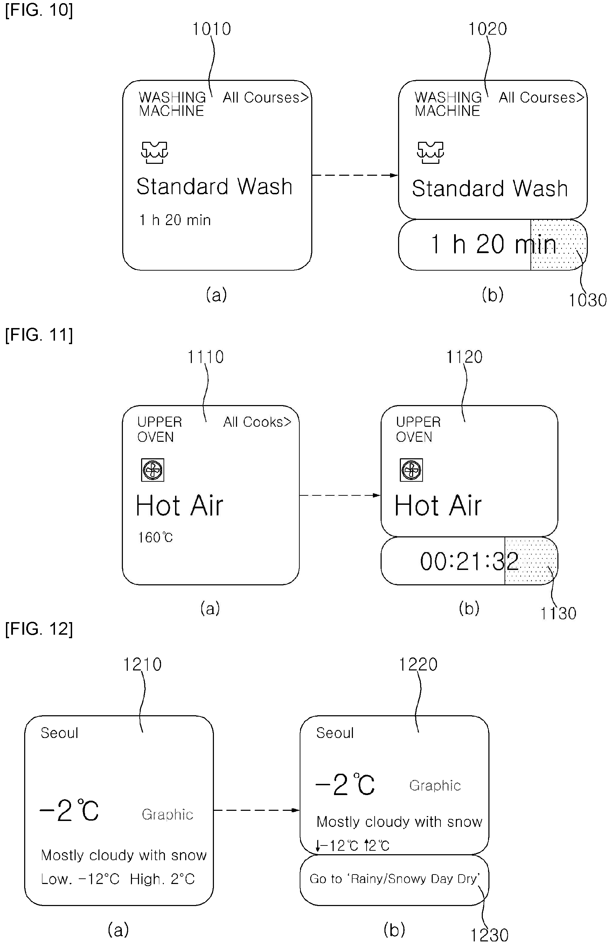

FIGS. 10 to 26 are diagrams referred to in the description of a method of operating a home appliance of embodiments of the disclosure, in which various user interfaces are exemplified.

In the present disclosure, according to a specific usage scene of the product, the form or order of widgets or content may be variably or adaptively configured. In other words, based on the current state of the product, effective information and functions may be provided, and functions needed under product conditions may be preferentially arranged to thereby improve usability. In addition, functions may be highlighted and provided according to their frequency of use or importance.

Furthermore, according to a specific usage scene of the product, a widget or content may be newly created.

FIGS. 10 and 11 respectively illustrate a case in which a widget or content changes in form and layout according to varying conditions.

When executing a product function, a progress bar may be generated along with product operation time information.

(a) of FIG. 10 illustrates an example of a washing machine widget 1010 before execution of a standard washing course, and (b) of FIG. 10 illustrates an example of a washing machine widget 1020 during execution of the standard washing course.

The washing machine widget 1010 before execution of the standard washing course may display, within a first size, at least one of a name of the selected standard washing course, an estimated time required, and an operation button, which may correspond to the entire displayed widget or certain text areas within the widget.

A user may select an 'All Courses' item within the washing machine widget 1010 before execution of the standard washing course to select another washing operation course. In addition, even after executing the standard washing course, the user may select the 'All Courses' item within the washing machine widget 1010 to cancel the execution of the standard washing course or to select another washing operation course.

In addition, in response to execution of a function of a specific electronic product, a widget related to the executed function may be displayed, and a progress bar for visually indicating operation time information of the executed function and a progress status of the executed function may be generated.

After receiving a command for the course operation, the washing machine widget 1020 after execution of the standard washing course may display the name of the standard washing course being executed. In addition, the size of the washing machine widget 1020 may be reduced from the first size to a second size, and a progress bar 1030 may be displayed on one side of the widget 1020 together with a product operation time, the product operation time being displayed on the progress bar 1030 in a third size smaller than the second size, thereby allowing a user to intuitively recognize the progress status.

For example, the progress bar 1030 may be displayed at a lower side of the washing machine widget 1020. Alternatively, the progress bar 1030 may be displayed at an upper, left, or right side of the washing machine widget 1020. (a) of FIG. 11 illustrates an example of an upper oven 1110 before execution of a hot air or convection function that uses a fan to circulate hot air within an oven to ensure even cooking, and (b) of FIG. 11 illustrates an example of an upper oven widget 1120 after execution of the hot air function.

The upper oven widget 1110 before execution of the hot air function may display a name of the selected hot air function and an estimated temperature.

The upper oven widget 1120 during execution of the hot air function may display the name of the hot air function being executed. In addition, as the size of the upper oven widget 1120 is reduced, and a progress bar 1030 containing product operation time information is displayed at a lower side of the upper oven widget 1120, enabling a user to intuitively recognize the progress status.

When a specific condition is satisfied, a command button related to a widget function may be generated.

(a) of FIG. 12 illustrates an example of a weather widget 1010. In a state where the weather widget 1010 is displayed, when a specific weather condition is satisfied, a recommended course button 1230 may be displayed that is related to at least one of the products that are physically/electrically/communicatively connected.

Referring to (b) of FIG. 12, a weather widget 1220 is displayed in a reduced size in correspondence with the size of the recommended course button 1230. The recommended course button 1230 may be displayed at a lower side of the reduced weather widget 1220.

The recommended course button 1230 may not only recommend a specific course but also serve as a shortcut button for the recommended course, allowing a user to execute the recommended course with a minimum number of operations. For example, as shown in Figure 12(b), the recommended course button 1230 may be a shortcut to executing a certain clothing drying course based on the information provided by the weather widget 1220.

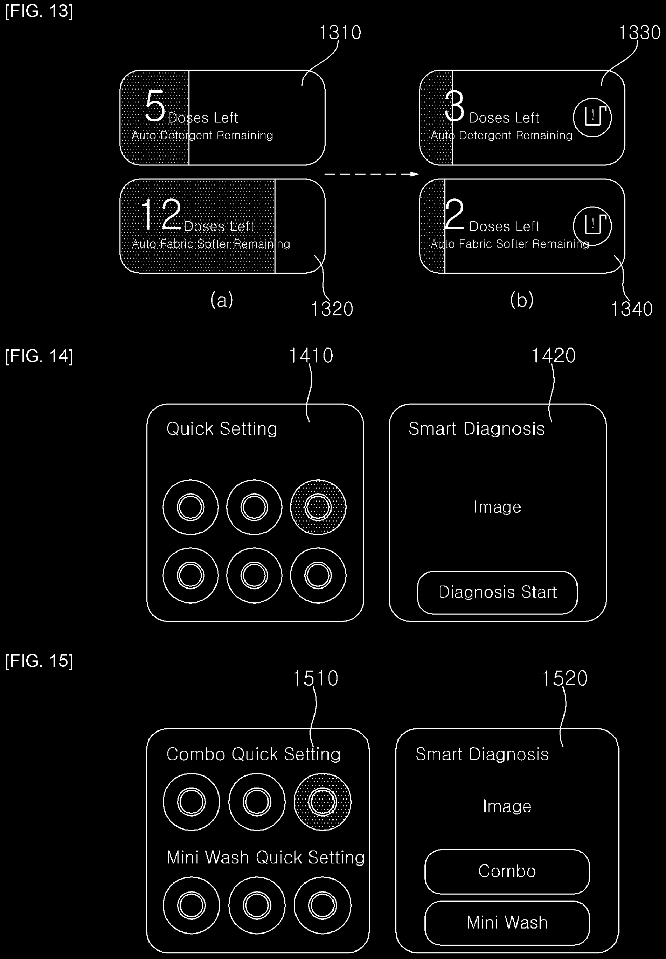

(a) of FIG. 13 illustrates an example of a detergent widget 1310 and a fabric softener widget 1320, (b) of FIG. 13 illustrates a detergent widget 1330 and a fabric softener widget 1340 when a remaining-amount threshold is reached.

When the remaining-amount threshold is reached, the detergent widget 1330 and the fabric softener widget 1340 may display shortage notification information of the corresponding detergent or fabric softener, respectively, along with a button for ordering more of the products. Thus, a user may not only check whether a detergent or fabric softener level is insufficient, but also order the insufficient products with a minimum number of operations.

In addition to examples related to a washing machine, the embodiments may also be applied to ordering consumable products of various other home appliances, such as a water purifier or a dishwasher. For example, when a remaining-amount threshold is reached, an ordering button for the associated consumable products (e.g., water filters, air filters, or the like) may be generated in the widget as in the case of the example described above.

According to another embodiment, when an additional product is connected, the widget function may be divided and displayed.

FIG. 14 illustrates an example user interface of a clothing treatment apparatus configured as an all-in-one washer/dryer, and FIG. 15 illustrates an example user interface when an additional washing apparatus is added to the bottom of the clothing treatment apparatus.

Referring to FIG. 14, a quick setting widget 1410 may display six quick setting items of a washing apparatus.

Referring to FIG. 15, as an additional washing apparatus (e.g., mini wash) is connected, a quick setting widget 1510 may display three quick setting items of the additional washing apparatus. Accordingly, the number of quick setting items for the washing apparatus may be reduced to three. As the number of appliances additionally connected increases, the number of setting icons corresponding to each product within a particular widget may be reduced.

In addition, the arrangement position of the quick setting items may be varied in accordance with an arrangement of the connected all-in-one washer/dryer clothing treatment apparatus and the additional washing apparatus, it is possible to intuitively indicate to which product a command button is related.

Referring to FIG. 14, a smart diagnosis widget 1420 displays one button for executing a smart diagnosis of the all-in-one washer/dryer clothing treatment apparatus.

Referring to FIG. 15, as the additional washing apparatus is connected, a smart diagnosis widget 1520 may display a button for executing a smart diagnosis of the all-in-one washer/dryer clothing treatment apparatus and a button for executing a smart diagnosis of the additionally connected washing apparatus.

In addition, in the smart diagnosis widget 1520, a command button corresponding to the all-in-one washer/dryer clothing treatment apparatus arranged at an upper side may be disposed toward the upper side, and a command button corresponding to the additionally added washing apparatus arranged at a lower side may be disposed toward the lower side.

The command button may be located at any adjacent position, rather than at the lower side.

Meanwhile, when an additional product is registered, a product tab menu corresponding to the registered additional product may be automatically generated.

In the case of a widget related to a common function of products that are physically, electrically, or communicatively connected, when an additional product is registered, a command button corresponding to the additionally registered product may be created.

As described with reference to FIGS. 10 to 15, by adaptively providing functions according to a user context, a user may use a home appliance in an intuitive and efficient manner.

As the display 221 adaptively adjusts the information configuration, arrangement and button function of widgets according to a context, allowing a user to utilize the functions more intuitively and flexibly.

When a product usage situation or a specific condition is satisfied, the information content, arrangement, and layout of widgets may be dynamically changed, thereby enabling a user to immediately check information most suitable for a current situation and quickly access a necessary function.

In addition, the user interface screen may be adaptively configured according to a situation, thereby improving user convenience. For example, arrangement orders of widgets/contents may be changed according to the situation, thereby providing functions and information that are more important and appropriate for a current situation. Accordingly, without learning fixed information, a user may easily and quickly perform a desired task through functions adaptively reconfigured according to the usage situation.

When a plurality of widgets are displayed, the plurality of widgets may be arranged based on at least one of a relevance order with a specific electronic product, a relevance order with a specific operation course, a preset priority, or an order of downloaded widgets.

For example, when the widget tab menu 413 is selected during product control, the plurality of widgets displayed in the second region 410 may be arranged in an order of high relevance to the product being controlled.

By moving widgets associated with a product that a user currently intends to operate to the front of an arrangement order, functions for easily and quickly performing a desired task may be preferentially presented, and a more intelligent and personalized user experience may be provided.

In addition, when the widget tab menu 413 is selected during control of a specific operation course, the plurality of widgets displayed in the second region 410 may be arranged in an order of high relevance to the specific operation course.

In other embodiments, the plurality of widgets may be sorted or arranged according to a set priority and a download order of the user.

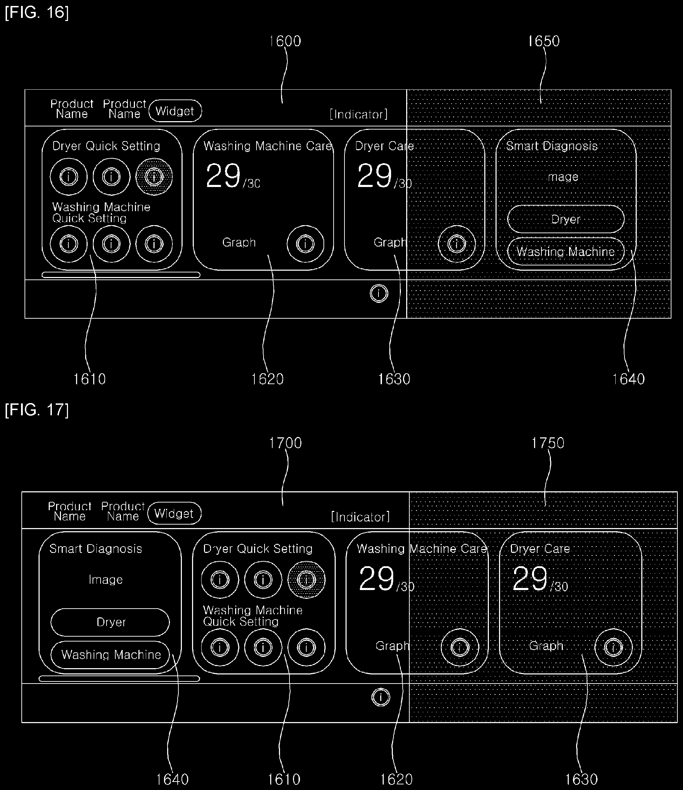

FIG. 16 and FIG. 17 illustrate an example in which an arrangement order of widgets is changed according to a situation.

Referring to FIG. 16, a user interface screen 1600 may display a quick setting widget 1610, a washing machine management widget 1620, a dryer management widget 1630, and a smart diagnosis widget 1640. An arrangement order of the widgets 1610, 1620, 1630, and 1640 may be based on a default setting order or a user's setting input.

According to the size of the display 221 and the widget, a certain widget 1640 may not be displayed on an initial screen, as shown by the shaded area in Figures 16 and 17. In addition, a certain widget 1630 may be partially displayed on the initial screen.

As the widgets 1630 and 1640 having a lower setting order is located in a region 1650 that is accessible through a scrolling operation, part or all of the widgets may be difficult or impossible to check and execute on the initial screen.

According to a situation, as shown in FIG. 17, a user interface screen 1700 may be changed.

For example, when a product error occurs or a predetermined condition for diagnosis is satisfied, the smart diagnosis widget 1640 may be placed at a foremost position so as to quickly start diagnosis.

As the smart diagnosis widget 1640 is moved to the front, the other widgets 1610, 1620, and 1630 may be shifted back by one position. Accordingly, on the initial screen, the washing machine management widget 1620 may be partially displayed, and the dryer management widget 1630 may not be displayed.

When necessary, a user may scroll to access a region 1750 that is not displayed.

Meanwhile, when the number of uses of the washing machine or the dryer reaches a reference number, the washing machine management widget 1620 or the dryer management widget 1630 may be moved to the front.

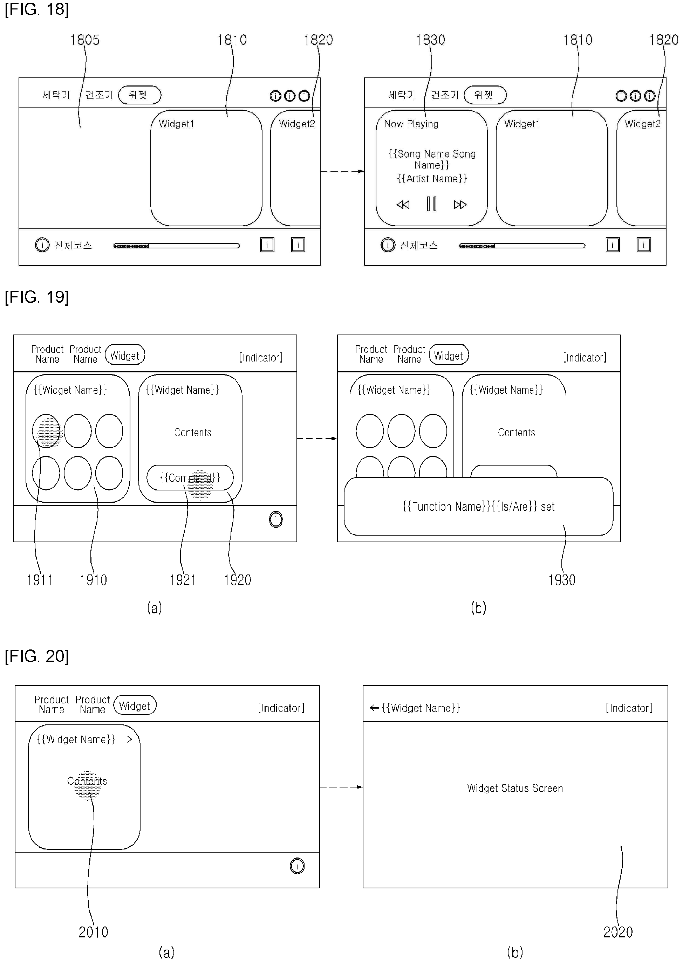

FIG. 18 illustrates a case in which a new widget is generated.

When a specific audio or video content is played by entering an entertainment widget, a 'Now Playing' widget 1830 may be generated and displayed in a widget region to enable quick checking.

When the specific audio or video content is played, widgets 1810 and 1820 previously displayed at the front may be shifted backward to secure a space 1850 at the foremost position and display the 'Now Playing' widget 1830.

Meanwhile, functions of buttons may be differently provided according to the function of widgets. A usage flow of command buttons within a widget may vary according to the function or theme of the widget. Thus, unnecessary steps may be minimized, thereby enabling intuitive use of the functions.

Referring to (a) of FIG. 19, widgets 1910 and 1920 may include command buttons 1911 and 1921, respectively.

Referring to (b) of FIG. 19, when a function of the widget 1910, 1920 is a simple setting, feedback 1930 for the setting is provided within a widget tab screen.

For example, when the function of the widget 1910, 1920 is a simple setting, the relevant setting may be applied without screen transition upon receiving an input on the command button 1911, 1921, and the feedback 1930 in the form of a notification may be provided to a user.

Referring to (a) and (b) of FIG. 20, when an input unrelated to product function operation is performed on a widget 2010 and the widget 2010 corresponds to a type for providing related detailed information, a widget detailed screen 2020 may be entered.

In addition, when a function related to the widget requires a program setting of an appliance product, the screen may be switched to a product tab to display a screen in which a program of the appliance product is set.

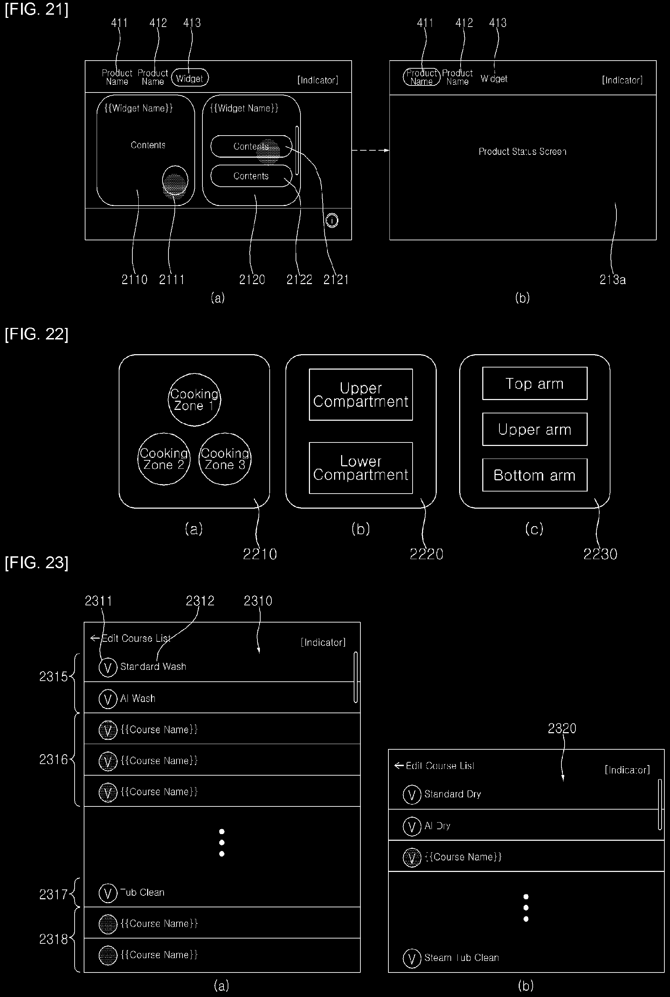

Referring to (a) of FIG. 21, a widget 2110 may include a command button 2111, and a widget 2120 may include command buttons 2121 and 2122.

Referring to (b) of FIG. 21, in the widget tab menu 413, the screen may be switched to the product tab menu 411 of a product corresponding to an input command button among the command buttons 2111, 2121, and 2122. In addition, the screen may be switched to a detailed screen 2130 of the product corresponding to the input command button among the command buttons 2111, 2121, and 2122.

Meanwhile, buttons within the widget may be displayed in a divided manner in consideration of physical characteristics of the product.

For example, referring to (a) of FIG. 22, an induction stove widget 2210 may arrange its internal objects in consideration of arrangement positions of cooking zones of the stove.

Referring to (b) of FIG. 22, a refrigerator widget 2220 may arrange its internal objects in consideration of arrangement positions of upper and lower compartments, such as a fridge and a freezer.

Referring to (c) of FIG. 22, a dishwasher widget 2220 may arrange its internal objects based on arrangement positions of a top arm, an upper arm, a bottom arm, and the like.

FIG. 23 illustrates an example of a course list editing screen. (a) of FIG. 23 illustrates an example of a course list editing screen 2310 of a washing machine, and (b) of FIG. 23 illustrates an example of a course list editing screen 2320 of a dryer.

One or more contents (or content items) displayed in the second region 420 upon selection of the product tab menu 411, 412 may include an operation course.

The course list editing screen 2310 includes list items including a check box 2311 and a course name 2312.

Items on the course list may be indicated as a checked course, an unchecked (cleared) course, or a mandatory course (non-editable, checked).

FIG. 23 illustrates an example in which courses 2316 checked by a user through the check box 2311 are located between a mandatory course (Standard Wash and AI Wash) 2315 and a mandatory course (Tub Clean) 2317.

On the course list, an unchecked course 2318 may be placed subsequent to the checked courses (including the mandatory courses) 2315, 2316, and 2317.

Meanwhile, a user may drag and drop one of the checked courses 2315, 2316, and 2317 to move it to a desired order.

Meanwhile, in the second region 420, the courses 2315, 2316, and 2317 may be arranged according to an arrangement order of the checked courses 2315, 2316, and 2317 on the course list.

Meanwhile, the user may execute a course automatic optimization function. When the course automatic optimization function is executed, the order of the courses may be automatically changed based on a user's usage pattern.

Meanwhile, selecting the All Courses item 431 may provide a user interface screen which includes a list of all courses.

In the list of courses, the courses may be arranged in a single column or a plurality of columns.

Menu objects for course filtering such as 'All' and 'Recently Used' may be displayed at one side of the list. For example, when entering the All Courses screen, an 'All' object is automatically selected (set as default), and information corresponding to all courses may be displayed. When the user selects 'Recently Used', only a predetermined number of recently used courses may be displayed through filtering. Menu items for course filtering such as 'All' and 'Recently Used' may include a hashtag. When an object including a hashtag is touched, courses satisfying a corresponding criterion may be selectively shown.

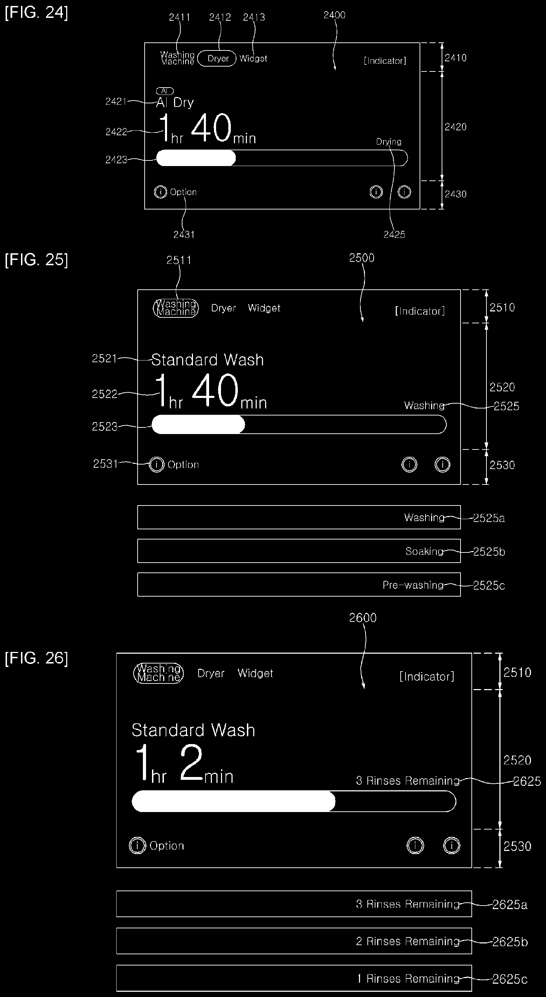

FIGS. 24 to 26 illustrate a screen related to an activated product tab. FIG. 24 illustrates an example of a screen 2400 provided as an AI drying operation course progresses.

Referring to FIG. 24, among tab menus 2411, 2412, and 2413 of a first region 2410, a course (cycle or menu) information of a product related to the activated product tab 2412 may be displayed in a second region 2420.

In the second region 2420, information including an operation course name being executed 2421, a total time required 2422, and a current progress status 2423 may be displayed.

In addition, a detailed (state) information 2425 of the cycle being executed may be displayed in the second region 2420.

The current progress status 2423 may be displayed in the form of a progress bar.

The detailed (state) information 2425 may be displayed at an upper side of the progress bar.

Meanwhile, an option button 2431 may be displayed in a third region 2430. Through the option button 2431, detailed options of the cycle currently in progress may be checked and input settings may be input.

FIGS. 25 and 26 respectively illustrate user interface screens 2500 and 2600 provided as a standard washing operation course progresses.

A washing machine product tab menu 2511 may be activated in a first region 2500. An option button 2431 may be displayed in a third region 2530.

An operation course name being executed 2521, a total time required 2522, information on a current progress status 2523, detailed (state) information 2525 of a cycle in progress may be displayed in a second region 2520.

The detailed (state) information 2525 of a cycle in progress may display individual stages of a washing step according to a detailed option value.

Referring to FIG. 25, the detailed (state) information 2525 of a cycle in progress may display one of individual stages such as washing 2525a, soaking 2525b, and preliminary washing 2525c.

FIG. 26 illustrates an example of a user interface screen 2600 in a case where a rinsing stage has been initiated.

Referring to FIG. 26, detailed (state) information 2625 of a cycle in progress may display one of 3 rinses remaining 2625a, 2 rinses remaining 2625b, and 1 rinse remaining 2625c, according to a set rinsing number option.

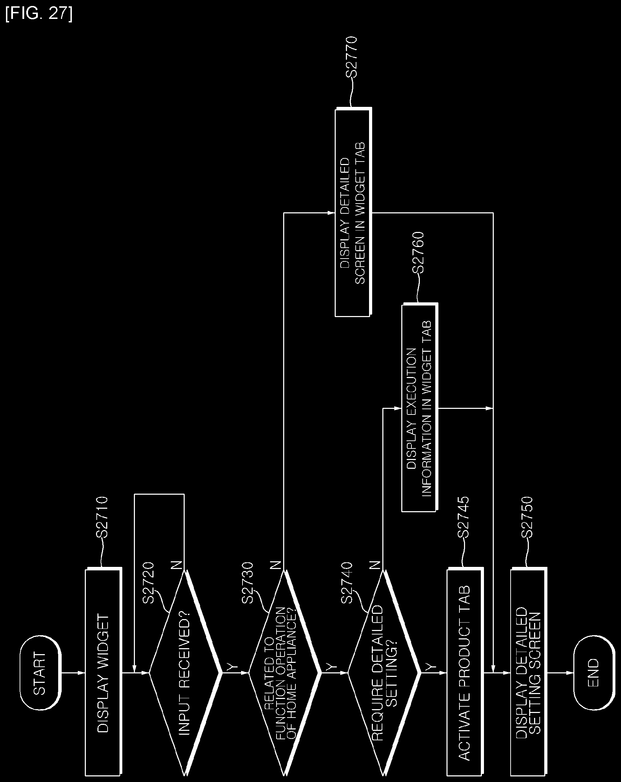

FIG. 27 is a flowchart illustrating a method of operating a home appliance according to an embodiment of the present disclosure.

Referring to FIG. 27, the display 221 may display a user interface screen including a widget (S2710).

For example, the user interface screen including the widget may be the user interface screen described above with reference to FIG. 5 and the like.

As described with reference to FIGS. 5 to 22, at least one widget may include a command button.

When a plurality of widgets are displayed, a sorting criterion of the plurality of widgets may vary depending on whether an electronic product connected to the display 221 is operating.

For example, when one or more electronic products connected to the display 221 are in operation, widgets related to the operating electronic products may be arranged at the front of the order. When no electronic product is in operation, widgets recently used or frequently used may be arranged at the front of the order.

When a touch input is received on a command button included in the widget (S2720), the processor 210 may determine whether a condition is satisfied (S2730, S2740).

First, the processor 210 may determine whether the command button is related to a function of a specific electronic product (S2730). Here, the specific electronic product may be an electronic product connected to the display 221 or an electronic product previously controlled through the user interface screen.

When the command button is related to the function of the specific product (Y at S2730), the processor 210 may determine whether the related function requires a detailed setting (S2740).

The command button may operate in different manners according to whether the command button is related to the function of the specific electronic product (S2730) and whether a detailed setting is required (S2740).

When the command button is related to a function of a specific electronic product (Y at S2730), and the related function requires the detailed setting (Y at S2740), the display 221 may display a detailed setting screen for the function of the specific electronic product (S2750).

The display 221 may activate a product tab menu of the specific electronic product (S2745), and may display the detailed setting screen (S2750).

When the command button is related to a function of a specific electronic product (Y at S2730), and the related function does not require a detailed setting (N at S2740), the display 221 may display execution information regarding the function of the specific electronic product (S2760).

The step of displaying the execution information may display the execution information in the widget tab menu. That is, the display 221 may directly display the execution information in the current widget tab menu screen without switching to a screen corresponding to a product tab menu of the specific electronic product.

The execution information may be provided in the form of a pop-up. Alternatively, the execution information may be displayed in the corresponding widget.

By contrast, when the command button is not related to the function of the specific electronic product (N at S2730), the display 221 may display a detailed screen corresponding to the widget in the widget tab menu. For example, when the input is not related to a function operation of a home appliance (such as home appliance registration, a smart diagnosis widget, provision of detailed information (e.g., weather), or navigation to a webpage (a third-party application)), the detailed screen may be displayed (S2770).

As for a function requiring a detailed setting, a detailed setting screen may be provided first. As for a function not requiring a detailed setting, the function may be directly executed and execution information regarding the function execution may be provided. Accordingly, it is possible to minimize user operations and screen transitions.

Even when command buttons have the same display format, the command buttons may operate differently according to corresponding functions, thereby improving user experience and enabling efficient product control.

Although preferred embodiments of the disclosure have been shown and described herein, the disclosure is not limited to the specific embodiments described above. It will be understood that various modifications and changes can be made by those skilled in the art without departing from the idea and scope of the disclosure as defined by the appended claims. Therefore, it shall be considered that such modifications, changes, and equivalents thereof are all included within the scope of the disclosure.

The foregoing description may be implemented as one or more computer programs, or as one or more combinations thereof, in computer-readable storage media.

The functions of the elements disclosed herein may be implemented by a circuit or a processing circuitry including a general-purpose processor, a special-purpose processor, an integrated circuit, an application specific integrated circuit (ASIC), a conventional circuit, and/or a combination thereof. The circuit may be a processor configured or programmed to perform the disclosed functions.

A processor, including transistors and other circuitry, may be regarded as a processing circuit or circuitry. As used herein, the terms "circuit", "unit", or "means" may refer to hardware that performs, or is programmed to perform, the functions described in the detailed description. The hardware may be the hardware disclosed herein or other known hardware, and may be hardware programmed or configured to execute the functions described in the detailed description of the specification. When the hardware is a processor that may be regarded as a type of circuit, the circuit, means, or unit may be software used to configure the hardware and/or the processor, in combination with the hardware. Furthermore, the computer storage medium may be a non-transitory computer storage medium, which may, for example, be executed by a cloud server-based system.

In addition, the data described in the specification may be computed or executed in various environments such as a cloud server-based system, an on-device system, and a distributed server system (a plurality of servers). The data may be distributedly processed in a cloud server or locally executed by an on-device processor, and results processed in each environment may be stored in non-volatile memory.

A server (or server system) may be configured to transmit output data for display on a specific electronic device, home appliance, or user display. In another example, the server may be configured as a set of computer-readable instructions such as one or more computer programs that constitute the output data. The computer program may be written in any type of programming language and under any programming paradigm, for example, declarative, procedural, assembly, object-oriented, data-oriented, functional, or imperative. The computer program may be written to perform one or more other functions and to operate under a computing environment, for example, on a physical device, a virtual machine, or across multiple devices. The functions described herein may thus be implemented by computer programs, for example, executed by a system, engine, module, or model.

A server computing device may be implemented on one or more devices having one or more processors at one or more locations. A user computing device or the server computing device may be communicatively connected, via a network, to one or more storage devices. The storage device may be a combination of volatile and non-volatile memory, and may be reside at the same or different physical locations as the computing devices. For example, the storage device may include various storage drives such as a drive, a solid-state drive, a tape drive, an optical storage, a memory card, ROM, RAM, DVD, or CD-ROM, or a readable medium within the drive. In other words, the storage device may be any type of non-transitory computer storage device capable of storing long-term dedicated data.

An electronic device, such as a home appliance, and a server computing device may be connected via a network to one or more storage devices. The storage device may be a combination of volatile and non-volatile memory, and may or may not reside at the same physical location as the computing device.

A server computing device may include one or more processors and memory. The memory stores information accessible by the processor and may include data that can be processed, stored, or modified by instructions executable by the processor. The memory may include both volatile and non-volatile memory. The processor may include a central processing unit (CPU), a graphics processing unit (GPU), a field-programmable gate array (FPGA), an application-specific integrated circuit (ASIC), or a tensor processing unit (TPU).

Instructions may be configured to perform specific operations when executed by a processor, and may be stored as object code or in an interpretable script format. Such instructions may be used to implement the system and may be executed on a local or a remote processor. Data may be retrieved, stored, or modified according to the instructions, and may be structured in a database, JSON, YAML, or XML format.

An electronic apparatus, including home appliances and hubs, may be configured similarly to a server computing device. Such an electronic apparatus may include user input and output devices, in addition to a processor, memory, instructions, and data. The server computing device may transmit data to the electronic apparatus, and the electronic apparatus may display at least a portion of the received data via a display. Furthermore, communication and data transmission between the server computing device and the electronic apparatus may be carried out through networks such as Bluetooth, Wi-Fi, wired, or wireless networks, and direct or indirect communication between computing devices may be supported using various protocols and connection methods.

## Claims

1. A method of operating a home appliance comprising:
displaying a user interface screen including a first region comprising a product tab menu and a widget tab menu, and a second region for displaying information based on one of the product tab menu or the widget tab menu;
receiving a signal based on a user input associated with one or more electronic products connected to the home appliance; and
varying a configuration of the first region or the second region of the displayed user interface screen based on the received signal.

2. The method of claim 1, further comprising activating one of the product tab menu corresponding to powering on of a product of the one or more electronic products, and
wherein the activated product tab menu is displayed to be visually distinct from other product tab menus.

3. The method of claim 1 or 2, further comprising displaying information in the second region comprising one or more content items based on selection of the product tab menu,
and, wherein the one or more content items include information of at least a state or a function of an electronic product corresponding to the selected product tab menu.

4. The method of claim 3, wherein the one or more content items include courses for operating the one or more electronic products arranged according to a preset order, and
the method further comprises performing automatic course optimization comprising reordering of the courses based on a usage pattern of the one or more electronic products.

5. The method of any one of the preceding claims, further comprising displaying information in the second region comprising at least one widget associated with at least one of the one or more electronic products included in the product tab menu.

6. The method of claim 5, wherein the at least one widget includes a command button corresponding to a function of the at least one of the one or more electronic products, and
the method further comprises causing execution of the function of the at least one electronic product in response to receiving a touch input via the command button.

7. The method of claim 6, wherein based on a detailed setting for the function being required for execution of the function, the method further comprises activating the product tab menu of the at least one electronic product in the first region and displaying a detailed setting screen for the function of the at least one electronic product in the second region.

8. The method of claim 6 or 7, wherein based on a detailed setting for the function not being required for execution of the function, the method further comprises displaying in the widget information related to execution of the function .

9. The method of any one of the preceding claims 5-8, wherein the at least one widget includes a command button and the method further comprises displaying in the second region a detailed screen corresponding to the widget in response to a selection received via the command button.

10. The method of any one of the preceding claims 5-9, further comprising:
receiving a selection of the widget tab menu; and
arranging the at least one widget displayed in the second region based on at least a relevance order of a specific electronic product, a relevance order based on a specific operation course, a preset priority, or an order of downloaded widgets.

11. The method of any one of the preceding claims 5-10, wherein, the at least one widget comprises a plurality of command buttons, and
wherein an arrangement position of the plurality of command buttons is varied based on an arrangement of the at least one of the one or more electronic products.

12. The method of any one of the preceding claims, further comprising:
displaying a widget in the second region related to an executed function of one of the one or more electronic products, and
displaying a progress bar visually indicating an operation time of the executed function and a progress status of the executed function.

13. The method of any one of the preceding claims, further comprising displaying a product tab menu based on registration of an additional product with the home appliance.

14. A home appliance comprising:
a display,
one or more processors, and
a memory storing instructions which when executed by the one or more processors, cause the one or more processors to:
cause the display to display a user interface screen including a first region comprising a product tab menu and a widget tab menu, and a second region for displaying information based on one of the product tab menu or the widget tab menu,
receive a signal based on a user input associated with one or more electronic products connected to the home appliance, and
vary a configuration of the first region or the second region of the displayed user interface screen based on the received signal.

15. A non-transitory computer-readable storage medium storing instructions for operating a home appliance that, when executed by one or more processors, cause the one or more processors to:
display a user interface screen including a first region comprising a product tab menu and a widget tab menu, and a second region for displaying information based on one of the product tab menu or the widget tab menu;
receive a signal based on a user input associated with one or more electronic products connected to the home appliance; and
vary a configuration of the first region or the second region of the displayed user interface screen based on the received signal.
